# EUROPÄISCHE PATENTANMELDUNG

(11) **EP 2 727 477 A2**
(43) Veröffentlichungstag der Anmeldung: **07.05.2014**
(21) Anmeldenummer: 14150350.8
(22) Anmeldetag: 24.09.2009
(51) Int. Cl.: A24B 15/24

(54) **Extraktive Tabakmaterial-Extrusion**

(30) Priorität: 22.10.2008 DE 102008052720
(62) Teilanmeldung aus: 09783360.2
(71) Anmelder: British American Tobacco (Germany) GmbH, 20354 Hamburg (DE)
(72) Erfinder: Schmekel, Gerald, 25337 Elmshorn (DE); Franke, Dietmar, 95445 Bayreuth (DE)
(74) Vertreter: Schwabe - Sandmair - Marx

(57) **Zusammenfassung**

Die Erfindung betrifft ein Tabakmaterial, erhalten durch ein Verfahren zum Extrahieren von Stoffen aus dem Tabakmaterial, bei dem das Tabakmaterial durch ein Gehäuse gefördert wird, dem ein Extraktionsmittel (14, 24) zugeführt und aus dem das Extraktionsmittel wieder abgeführt wird, wobei die Extraktion durch ein Kontaktieren des Tabakmaterials mit dem Extraktionsmittel während eines Tabakmaterial-Extrusionsprozesses in einem Extruder (10, 20) unter erhöhtem Extrusionsdruck stattfindet.

## Beschreibung

Die Erfindung liegt auf dem technischen Gebiet der Extraktion von Stoffen aus Tabakmaterial, wie beispielsweise bei der so genannten Nitrat-Extraktion. Eine Abreicherung von Tabakinhaltsstoffen aus Tabakmaterial, insbesondere aus einem Rippenmaterial, ist in der DE 195 35 587 A1 beschrieben worden, wobei hierzu ein zylindrisches Gehäuse mit einer Förderschnecke verwendet wird. Das Gehäuse ist in einer Schrägstellung angeordnet, und eingebrachtes Wasser sammelt sich im Bereich des unteren Tabakmaterial-Eintrittsendes, wodurch die eingebrachten Tabakrippen an Nitrat abgereichert werden. Eine relevante Materialverdichtung findet in diesem Gehäuse nicht statt; die Druckerhöhung ist moderat. Insgesamt liegt der Nachteil einer Behandlung gemäß einem solchen Stand der Technik schon darin, dass überhaupt eine separate Abreicherungsvorrichtung benötigt wird, und in den damit verbundenen Anlagen- und Betriebskosten.

Aus der DE 10 2004 059 388 B4 sind ein Verfahren und eine Vorrichtung bekannt, bei der mittels eines Extruders ein Tabakrippenmaterial zerkleinert wird.

Es ist die Aufgabe der Erfindung, die Extraktion von Tabakinhaltsstoffen aus einem Tabakmaterial zu optimieren. Insbesondere soll ein hoher Extraktionsgrad erreicht werden und/oder der apparative Aufwand sowie die Betriebskosten gesenkt werden.

Diese Aufgabe wird erfindungsgemäß durch ein Tabakmaterial gemäß dem Anspruch 1 gelöst. Die Unteransprüche definieren bevorzugte Ausführungsformen der Erfindung.

Grundsätzlich hat die vorliegende Erfindung mit dem Stand der Technik die Merkmale der Verwendung eines Gehäuses, einer Förderung durch das Gehäuse und eines Extraktionsmittels gemeinsam, aber erfindungsgemäß wird die Extraktion durch ein Kontaktieren des Tabakmaterials mit dem Extraktionsmittel während eines Tabakmaterial-Extrusionsprozesses in einem Extruder unter erhöhtem Extrusionsdruck gekennzeichnet. Wenn von "Extrusion" und "Extruder" die Rede ist, so wird darunter eine Behandlung des Tabakmaterials verstanden, bei der eine hohe mechanische Verdichtung des Tabakmaterials vom Eingang bis zum Auslass (Werkzeug) erfolgt, wobei das Werkzeug zum Ausbringen des Tabaks und zur Formgebung bzw. Strukturbildung dient.

Tabakmaterialien, die zur Herstellung von rauchfähigem Schnitttabak oder anderen Rauchprodukten (Zigaretten) verwendet werden können, sind im Rahmen der vorliegenden Erfindung alle bekannten Fraktionen, beispielsweise Lamina, Rippen, etc., die durch extrative Extrusion konditioniert werden können und dabei eine Aufwertung erfahren. Eine Konditionierung (Feuchtung, Erwärmung) ist dabei die Aufbereitung von Tabakmaterialien mit Wasser/Dampf z. B. zum Zwecke der Erhöhung der mechanischen Belastbarkeit.

Die vorliegende Erfindung verknüpft die Vorzüge einer Extraktion und damit Abreicherung von Bestandteilen mit der Fähigkeit von Extrudern, Feststoffe zu zerkleinern, zu mischen, zu konditionieren und anschließen neue Strukturen zu bilden. Der hohe Druck, der in derartigen Extrudern herrscht (über 3 bar Absolutdruck, insbesondere über 10 bar Absolutdruck, speziell auch über 50 bar Absolutdruck, vorzugsweise über 100 bar Absolutdruck und bis zu 200 bar Absolutdruck) erzeugt ein Druckgefälle zur Umgebung hin, und die Erfindung hat gerade erkannt, dass dieses Druckgefälle dazu genutzt werden kann, ein zugegebenes Extraktionsmittel nach der Aufnahme der Inhaltsstoffe wieder aus dem Gehäuse auszubringen. Der hohe Druck und die Vermischung im Extruder tragen dazu bei, dass das Extraktionsmittel eine hohe Penetration des Tabakmaterials erzielt, wodurch die Extraktion verbessert wird. Insofern ergibt sich ein synergetischer Effekt, weil einerseits mehrere Prozessschritte zusammengefasst werden können (Extruderprozesse wie Formgebung/Konditionierung und Extraktionsprozesse) und andererseits die Extraktion Aufgaben in einem Extruder besser erledigt werden kann.

Bei einer bevorzugten Ausführungsform des erfindungsgemäßen Verfahrens werden also der erhöhte Extrusionsdruck und eine erhöhte Extruksionstemperatur durch mechanische Verdichtung des Tabakmaterials in Extruder erzeugt, insbesondere durch eine Förderschnecke eines Schneckenextruders. Dabei werden der Enddruck (Differenzdruck zur äußeren Umgebung) und der Druckverlauf im Extruder durch den freien Formungsquerschnitt im Werkzeug bestimmt, wobei der Arbeitsdruck durch konstruktive Gestaltung des Auslaufes (Werkzeug) oder der Schneckengeometrie bestimmt werden kann. Außerdem kann durch Drehzahlvariationen der Schnecke die Größe der Dissipation und die damit einhergehende Erhitzung kontrolliert werden. Im Zusammenspiel von Wasserzugabe und Energieertrag im Extruder stellt sich nach der Formgebung, beispielsweise zur Faser, ein Endfeuchtegehalt zur weiteren Verarbeitung ein. Dieser Endfeuchtegehalt kann durch die verschiedenen Zugaben, Entnahmen und Einstellungen beispielsweise immer bei 40% gehalten werden.

Das Extraktionsmittel kann eine Flüssigkeit, insbesondere Wasser oder ein Gas sein, das durch Druck und/oder Temperatur in einen extraktionsfähigen Zustand gebracht wird, insbesondere in einen flüssigen und/oder überkritischen Zustand. Es ist grundsätzlich zu bemerken, dass außer Wasser auch alle anderen gemäß dem Stand der Technik bekannten Extraktionsmittel (je nach gewünschter Extraktion) bei der vorliegenden Erfindung Verwendung finden können.

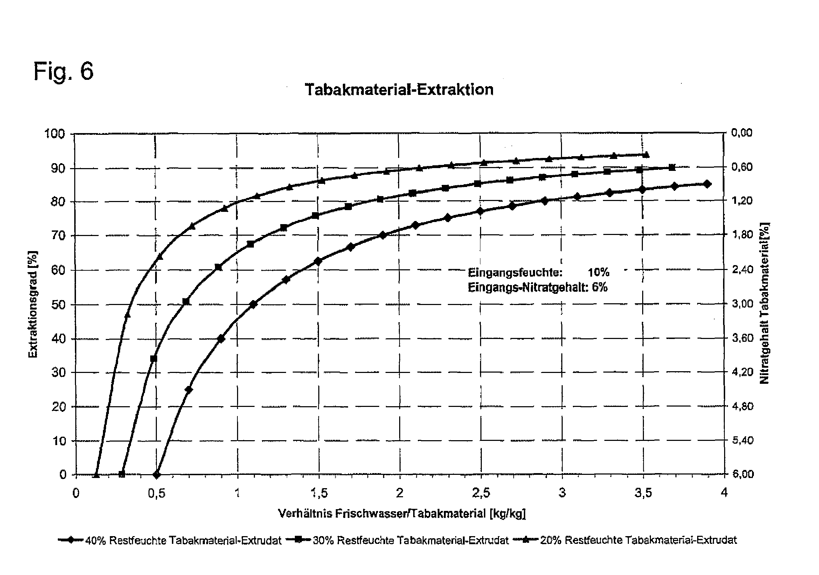

Das Zusammenwirken von Wasserzugabe, Extraktionserfolg und der erreichten Ausgangsfeuchte nach dem Verlassen des Extruders kann in der Figur 6 studiert werden. Wie ersichtlich wird, ist, neben dem Verhältnis von Frischwasser/Tabakmaterial, die erreichbare Endfeuchte für den Extraktionserfolg maßgeblich. Das Modell basiert nur auf einer Massenbilanz nach dem "Verdünnungsprinzip". Es setzt eine untersättigte Wasserlösung voraus (kein Überschreiten des Löslichkeitsproduktes) und arbeitet im Frischwasserverfahren, also ohne Teilrückführung der Extraktphase.

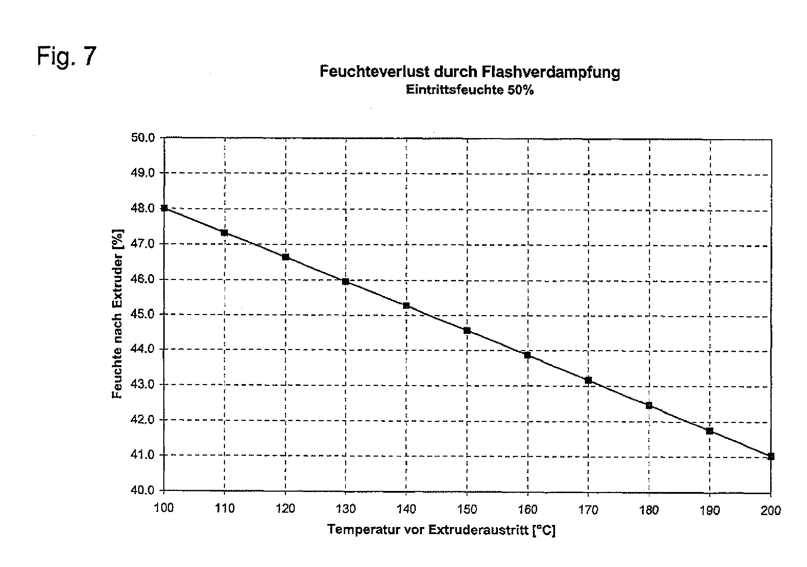

Die erreichbare Endfeuchte setzt sich aus dem Verlust des Extraktionsmittels/Extraktwassers vor dem Werkzeug und durch die Verdampfung nach dem Werkzeug zusammen. Nur der "mechanische Wasserverlust" durch das Extrakt trägt zur Abreicherung bei, während der "thermische Wasserverlust" nur eine Auswirkung auf die Produktendtemperatur hat. Die Figur 7 veranschaulicht die zusätzliche Abtrocknung durch Flashverdampfung beim Austritt aus dem Extruder.

Ein durch die erfindungsgemäße Verarbeitung erzeugtes Produkt zeichnet sich durch eine Verarmung an im Extraktionsmittel löslichen Inhaltsstoffen, wie Nitrat, Chlorid, Phosphat, Nikotin, Proteine (je nach pH-Wert) etc. aus. Weiterhin werden die unerwünschten, so genannten TSNA-Inhaltsstoffe abgereichert (tabakspezifische Nitrosoamine). Interessanterweise wurde bei der Ausführung der vorliegenden Erfindung eine zusätzliche, um ca. 50% erhöhte Füllfähigkeit festgestellt, die sich wiederum in einer vorteilhaften Reduktion der Stopfdichte in der Zigarette auswirkt. Die erhöhte Füllfähigkeit kann nur zum Teil durch den Massenverlust an Inhaltstoffen bei gleichem Körpervolumen erklärt werden. An erfindungsgemäß gefertigten Zigaretten ist natürlich die verminderte NO-Ausbeute augenfällig, die mit dem Nitratverlust korreliert und das Produkt aufwertet.

Bei einer erfindungsgemäßen Ausführungsform wird das mit dem Extraktionsmittel beaufschlagte Tabakmaterial durch einen Seiher, insbesondere einen Scheibenseiher, einen Korbseiher oder einen Stabseiher, geführt, durch den das Extrakt aus dem Extruder abgeschieden wird. Zur Abscheidung des Extraktes wird also hier ein Seiher verwendet, und solche Seiher haben Spaltdurchlässe, insbesondere sich erweiternde Spaltdurchlässe. Sie haben den Vorteil, dass sie nicht verstopfen und ihre Arbeit über eine lange Zeit ohne Wartungseingriffe durchführen können. Vorteilhaft wirkt sich auch aus, dass solche Seiher relativ leicht für die Zwecke der vorliegenden Erfindung einsatzbereit gemacht werden können. Es gibt schon Seihervorrichtungen beispielsweise für Ölpressen, wobei ein augefälliger Unterschied zur vorliegenden Erfindung darin liegt, dass erfindungsgemäß nicht das Extrakt genutzt werden soll, sondern das geseiherte Produkt. Ein weiterer Unterschied zwischen einer Schneckenpresse mit Seiher gemäß dem Stand der Technik (z.B. Ölpresse) und der vorliegenden Erfindung besteht darin, dass solche Schneckenpressen in der Regel ohne Werkzeug oder Düse am Austritt arbeiten, so dass längs des Weges ein Druckmaximum auftritt (Druckverlaufvariation durch Schneckengeometrie-Variation). Bei Extrudern steigt der Druck stetig bis zum Auslass am Werkzeug (Drossel). Unter dem Begriff "Werkzeug" versteht man im Bereich der Extrusion Vorrichtungen zur Formgebung von teigigen Massen oder Pasten. Im einfachsten Fall sind solche Werkzeuge Lochbleche (Matrizen), während komplizierte Vorrichtungen auch das Extrudieren komplexer Strukturen einschließlich Umhüllungen und eine Koextrusion ermöglichen. In diesem Sinne wird der Seiher gemäß der vorliegenden Erfindung in einem neuen technischen Zusammenhang verwendet.

Es besteht grundsätzlich die Möglichkeit den Extraktionsvorgang so zu betreiben, dass immer Frischwasser zugeführt und das Extrakt immer abgeführt wird. Natürlich kann aber auch (z.B. zur Wassereinsparung) das Extrakt ganz oder teilweise als Extraktionsmittel wieder dem Extruder zugeführt werden, wobei insbesondere dem Extrakt frisches Extraktionsmittel zugeführt und/oder das Extrakt an den zu extrahierenden Stoffen durch eine oder mehrere Maßnahmen, z. B. Ionentausch, Umkehrosmose, pH-Wert-Einstellung, abgereichert wird.

Bei einer Ausführungsform des erfindungsgemäßen Verfahrens wird das Tabakmaterial vor der Extraktion einer mechanischen Druckerhöhung außerhalb der Extrusion oder zusätzlich zur Extrusionsdruckerhöhung unterzogen, speziell mittels einer Hochdruck-Zahnradpumpe. Die Druckerhöhung kann vorteilhafterweise nach der Extrusion und vor der Extraktion stattfinden, und es besteht die Möglichkeit, das Extraktionsmittel dem Tabakmaterial vor der mechanischen (zusätzlichen) Druckerhöhung zuzuführen. Speziell kann diese Zuführung am Ende des Extrusionsprozesses bzw. Schneckenextruders oder nach dem Extrusionsprozess bzw. Schneckenextruder erfolgen.

Durch diese mechanische Druckerhöhung wird im Extraktionsbereich, also in der Extraktionseinheit der Vorrichtung (z.B. Seihereinheit), ein höherer Druck geschaffen, was eine bessere Trennung der festen Bestandteile von den flüssigen Bestandteilen ermöglicht. Der Aufbau des höheren Drucks in der Druckerhöhungseinheit (Pumpe) macht auch das Förderverhalten im Extruder, also beispielsweise in der Schneckenextrudereinheit besser. Wenn die Extraktionsmittelzugabe vor der Pumpe und die Extraktionsmittelentnahme nach der Pumpe erfolgt, lassen sich auch diese beiden Maßnahmen hinsichtlich ihrer Druckbereiche entkoppeln.

Eine mit dem erfindungsgemäßen Tabakmaterial in Zusammenhang stehende Extraktionsvorrichtung ist dadurch gekennzeichnet, dass das Gehäuse zur einem Schneckenextruder gehört, wobei das Extrakt mittels des darin erzeugten Drucks und über das Druckgefälle zur Umgebung hin aus dem Extruder abgeschieden wird. Der Extruder kann ein Einschnecken- oder Doppelschneckenextruder sein, wobei die Schnecke(n) durch mechanische Verdichtung des Tabakmaterials den erhöhten Extrusionsdruck und eine erhöhte Extrusionstemperatur erzeugt bzw. erzeugen. Einschneckenextruder sind besonders kostengünstig; Doppelschneckenextruder sind aufwändiger. Wie schon angedeutet, kann im Bereich des Extraktauslasses ein Seiher angeordnet sein, insbesondere ein Scheibenseiher, ein Korbseiher oder ein Stabseiher, durch den das Extrakt aus dem Extruder abgeschieden wird. An dem Seiher kann dann eine Auffangwanne angeordnet werden, deren Ausgang den Extraktauslass bildet. Wenn eine Extraktrückführung gewünscht wird, wird diese zwischen dem Extraktauslass und dem Extraktionsmitteleinlass stattfinden, und es kann eine Abreicherungsvorrichtung für die zu extrahierenden Stoffe und/oder eine Zuführung für frisches Extraktionsmittel vorgesehen werden. Der Extruder kann am Extruderauslass ein abstandsvariables Werkzeug aufweisen, mit dem der Extrudermassenstrom eingestellt werden kann, und/oder eine Drehzahlregelung für die Schnecke(n), mit welcher der Pressdruck im Extruder eingestellt werden kann. Die gewünschte Ausformung des Tabakmaterials wird durch die Werkzeugwahl eingestellt. Der Extraktionsmitteleinlass wird sich vorteilhafterweise in einem Bereich des Extrudergehäuses befinden, der zwischen dem Tabakmaterialeintritt und im Wesentlichen der Gehäusemitte liegt, insbesondere kann er sich in der Nähe des Materialeinlasses befinden. Wenn das Gehäuse aus einzelnen, verbindbaren und trennbaren Abschnitten bzw. "Schüssen" aufgebaut ist, kann einer der Schüsse den oben genannten Seiher unterbringen und der Extraktionsmittelauslass wird sich in dem Schuss befinden, in dem auch der Extraktauslass bzw. Seiher angeordnet ist. Der Extraktionsmitteleinlass wiederum kann sich in der Nähe des Tabakmaterialeinlasses befinden, insbesondere im selben oder im darauf folgenden Schuss.

Ganz allgemein lässt sich sagen, dass im Bereich des "Verdichtungsweges" eines Extruders (Ende der Eintrittszone bis zum Werkzeug) Vorrichtungen eingebracht werden, die es gestatten, das Druckgefälle zur Umgebung für das Auspressen von beispielsweise zugesetzten Wasser (Extraktionsmittel) in einem Extruder (z.B. Einwellen-Stiftextruder) zu nutzen. Durch die Ausschleusung des Extraktionsmittels (Seiher) wird eine mechanische Abreicherung während der Extrusion ermöglicht, welche zusätzlich über den Stand der Technik hinausgehende Freiheitsgrade im Prozess erlaubt. Beispielsweise bestimmt die Zugabe von Wasser/Dampf die Extraktionstemperatur, da Feuchtezugabe und Viskosität in einem Zusammenhang stehen.

Die Seihervorrichtungen gehen bevorzugt mit unterschiedlichen Schneckenkonfigurationen in einem Extruder einher, d.h. mit einer dazugehörigen optimierten Schnecke. Die Auslegung der Oberflächenbeschaffenheit muss berücksichtigen, dass die Reibungskräfte zwischen der Extraktionsvorrichtung (Seiher) und dem Pressgut höher sind als zwischen dem Presskuchen und der Schnecke. Damit wird ein Mitdrehen des Pressgutes mit der Schnecke reduziert. Ein "Slip" an der Schnecke verringert oder verhindert im schlimmsten Falle eine Förderung.

Eine Ausführungsform einer Vorrichtung weist eine mechanische Druckerhöhungseinheit für das Tabakmaterial auf, die vor der Extraktionseinheit und insbesondere nach der Extrusionseinheit angeordnet ist. Die Extrusionseinheit ist dabei im Wesentlichen beispielhaft der Schneckenextruder ohne Extrusionswerkzeug, während die Extraktionseinheit aus dem Teil der Vorrichtung besteht, der beispielsweise die Seihervorrichtung umfasst und auf den dann das Werkzeug folgt. Es ist bei einer solchen Konfiguration möglich, die mechanische Druckerhöhungseinheit als Hochdruckpumpe auszugestalten, speziell als Zahnradpumpe. Ferner kann der Extraktionsmitteleinlass insbesondere am Ende der bzw. hinter der Extrusionseinheit angeordnet sein. Die Vorteile der hier angesprochenen Vorrichtungsausgestaltung wurden oben bei der Beschreibung der entsprechenden Verfahrensschritte schon erörtert.

Nachfolgend werden weitere Aspekte der Erfindung beschrieben. Die Anmelderin behält es sich vor, auf einen oder mehrere Aspekte jeweils eine eigene Anmeldung zu richten. Soweit in den als Aspekte gekennzeichneten Merkmalen Bezugszeichen verwendet werden, handelt es sich um Bezugszeichen von Ausführungsbeispielen, die nachfolgend noch beschrieben werden. Die Aspekte sind auf diese Ausführungsbeispiele nicht beschränkt, obgleich die Ausführungsbeispiele auch für die unter den Aspekten beschriebenen Merkmale bevorzugte Ausgestaltungsmöglichkeiten aufzeigen.

Aspekt 1#: Verfahren zum Extrahieren von Stoffen aus einem Tabakmaterial, bei dem das Tabakmaterial durch ein Gehäuse gefördert wird, dem ein Extraktionsmittel (14, 24) zugeführt und aus dem das Extraktionsmittel wieder abgeführt wird, dadurch gekennzeichnet, dass die Extraktion durch ein Kontaktieren des Tabakmaterials mit dem Extraktionsmittel während eines Tabakmaterial-Extrusionsprozesses in einem Extruder (10, 20) unter erhöhtem Extrusionsdruck stattfindet.

Aspekt 2#: Verfahren nach Aspekt 1#, bei dem der erhöhte Extrusionsdruck und eine erhöhte Extrusionstemperatur durch mechanische Verdichtung des Tabakmaterials im Extruder (10, 20) erzeugt werden, insbesondere durch eine Förderschnecke eines Schneckenextruders (10, 20).

Aspekt 3#: Verfahren nach Aspekt 1# oder 2#, bei dem als Extraktionsmittel eine Flüssigkeit, insbesondere Wasser, oder ein Gas zugeführt wird, das durch Druck und/oder Temperatur in einen extraktionsfähigen Zustand gebracht wird, insbesondere in einen flüssigen und/oder überkritischen Zustand.

Aspekt 4#: Verfahren nach einem der Aspekte 1# bis 3#, bei dem das mit dem Extraktionsmittel beaufschlagte Tabakmaterial durch einen Seiher (17, 27), insbesondere einen Scheibenseiher, einen Korbseiher oder einen Stabseiher, geführt wird, durch den das Extrakt aus dem Extruder (10) abgeschieden wird.

Aspekt 5#: Verfahren nach Aspekt 4#, bei dem das Extrakt ganz oder teilweise als Extraktionsmittel wieder dem Extruder zugeführt wird, wobei insbesondere dem Extrakt frisches Extraktionsmittel zugesetzt und/oder der Extrakt an den zu extrahierenden Stoffen durch eine oder mehrere der folgenden Maßnahmen abgereichert wird:
- Ionentausch,
- Umkehrosmose,
- pH-Wert-Einstellung.

Aspekt 6#: Verfahren nach einem der Aspekte 1# bis 5#, bei dem das Tabakmaterial vor der Extraktion einer mechanischen Druckerhöhung außerhalb der Extrusion oder zusätzlich zur Extrusion unterzogen wird, insbesondere mittels einer Hochdruck-Zahnradpumpe.

Aspekt 7#: Verfahren nach Aspekt 6#, bei dem die mechanische Druckerhöhung nach der Extrusion und vor der Extraktion stattfindet.

Aspekt 8#: Verfahren nach Aspekt 6# oder 7#, bei dem das Extraktionsmittel dem Tabakmaterial vor der mechanischen Druckerhöhung, insbesondere am Ende des Extrusionsprozesses bzw. Schneckenextruders oder nach dem Extrusionsprozess bzw. Schneckenextruder, zugeführt wird.

Aspekt 9#: Extraktionsvorrichtung für Tabakmaterial mit einem Gehäuse (13, 23) und einer Fördereinrichtung (5) im Gehäuse, sowie mit einem Extraktionsmitteleinlass (3) und einem Extraktauslass (7), dadurch gekennzeichnet, dass das Gehäuse zu einem Schneckenextruder (10, 20) gehört, wobei das Extrakt mittels des darin erzeugten Drucks und über das Druckgefälle zur Umgebung hin aus dem Extruder (10, 20) abgeschieden wird.

Aspekt 10#: Vorrichtung nach Aspekt 9#, dadurch gekennzeichnet, dass der Extruder ein Einschnecken- oder ein Doppelschneckenextruder ist, wobei die Schnecke(n) durch mechanische Verdichtung des Tabakmaterials den erhöhten Extrusionsdruck und eine erhöhte Extrusionstemperatur erzeugt bzw. erzeugen.

Aspekt 11#: Vorrichtung nach Aspekt 9# oder 10#, dadurch gekennzeichnet, dass im Bereich des Extraktauslasses (7) ein Seiher (17, 27) angeordnet ist, insbesondere ein Scheibenseiher, einen Korbseiher oder einen Stabseiher, durch den das Extrakt aus dem Extruder (10) abgeschieden wird.

Aspekt 12#: Vorrichtung nach Aspekt 11#, dadurch gekennzeichnet, dass an dem Seiher (17, 27) eine Auffangwanne (9) angeordnet ist, deren Ausgang dann den Extraktauslass (7) bildet.

Aspekt 13#: Vorrichtung nach einem der Aspekte 9# bis 12#, dadurch gekennzeichnet, dass zwischen dem Extraktauslass (7) und dem Extraktionsmitteleinlass (3) eine Extraktrückführung angeordnet ist, insbesondere mit einer Abreicherungseinrichtung für die zu extrahierenden Stoffe und/oder mit einer Zuführung für frisches Extraktionsmittel.

Aspekt 14#: Vorrichtung nach einem der Aspekte 9# bis 13#, dadurch gekennzeichnet, dass der Extruder ein abstandsvariables Werkzeug am Extruderauslass aufweist, mit dem der Extrudermassenstrom eingestellt werden kann, und/oder eine Drehzahlregelung für die Schnecke(n), mit welcher der Pressdruck im Extruder eingestellt werden kann.

Aspekt 15#: Vorrichtung nach einem der Aspekte 11# bis 14#, dadurch gekennzeichnet, dass der Extruder ein Gehäuse aus einzelnen, verbindbaren und trennbaren, Abschnitten bzw. Schüssen aufweist, wobei einer der Schüsse den Seiher (17, 27) unterbringt.

Aspekt 16#: Vorrichtung nach einem der Aspekte 9# bis 15#, dadurch gekennzeichnet, dass der Extraktionsmitteleinlass (3) sich ein einem Bereich des Extrudergehäuses befindet, der zwischen dem Tabakmaterialeintritt und im Wesentlichen der Gehäusemitte liegt.

Aspekt 17#: Vorrichtung nach Aspekt 16#, dadurch gekennzeichnet, dass der Extraktionsmitteleinlass (3) sich in der Nähe des Tabakmaterialeinlasses befindet, insbesondere im selben oder darauf folgenden Schuss.

Aspekt 18#: Vorrichtung nach Aspekt 16#, dadurch gekennzeichnet, dass der Extraktionsmitteleinlass (3) in einem Gehäuseabschnitt oder einem Schuss vor dem Gehäuseabschnitt oder Schuss befindet in dem der Extraktauslass (7) bzw. Seiher (17, 27) angeordnet ist.

Aspekt 19#: Vorrichtung nach einem der Aspekte 9# bis 16#, dadurch gekennzeichnet, dass sie eine mechanische Druckerhöhungseinheit für das Tabakmaterial aufweist, die vor der Extraktionseinheit und insbesondere nach der Extrusionseinheit angeordnet ist.

Aspekt 20#: Vorrichtung nach Aspekt 19#, dadurch gekennzeichnet, dass die mechanische Druckerhöhungseinheit eine Hochdruckpumpe, speziell eine Zahnradpumpe ist, wobei der Extraktionsmitteleinlass insbesondere am Ende der bzw. hinter der Extrusionseinheit angeordnet ist.

Die Erfindung wird im Weiteren anhand von Ausführungsbeispielen und unter Bezugnahme auf die beiliegenden Zeichnungen näher erläutert. Sie kann alle hierin beschriebenen Merkmale einzeln sowie in jedweder sinnvollen Kombination umfassen. In den beiliegenden Zeichnungen zeigen:
- Figur 1: eine Vorrichtung als Schemazeichnung mit Frischwasserzufuhr und Extraktabfuhr;
- Figur 2: eine Vorrichtung mit Extraktrückführung;
- Figur 3: einen Querschnitt durch einen Gehäuseschuss einer Vorrichtung mit Stabseiher;
- Figuren 4 und 5: schematische Zeichnungen für Ausführungsformen mit Scheibenseiher;
- Figur 6: ein Diagramm zur Tabakmaterial-Extraktion in Abhängigkeit vom Nitratgehalt und Frischwasseranteil;
- Figur 7: eine grafische Darstellung des Feuchteverlustes durch Flashverdampfung an einem Extruderaustritt;
- Figur 8: eine Prozessgrafik, die Druck und Vorschubgeschwindigkeit über die Extruderlänge wiedergibt; und

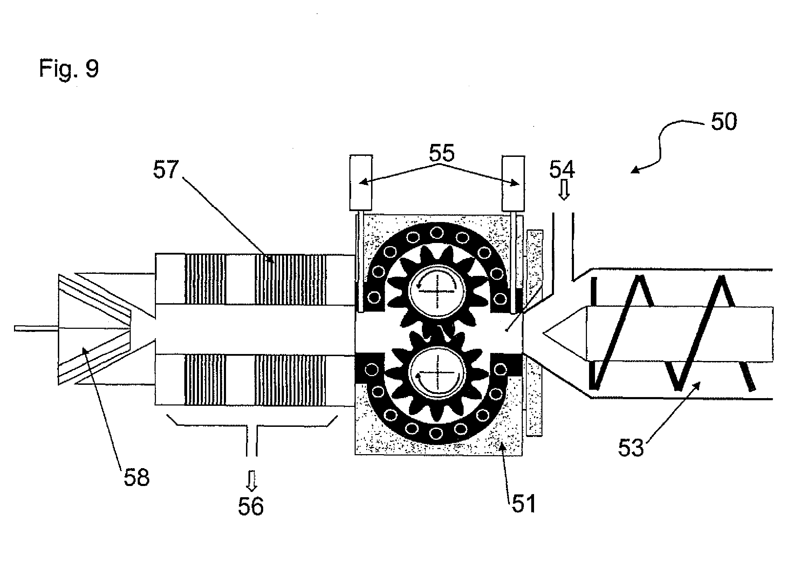

- Figur 9: eine Vorrichtung mit zusätzlicher Hochdruckpumpe.

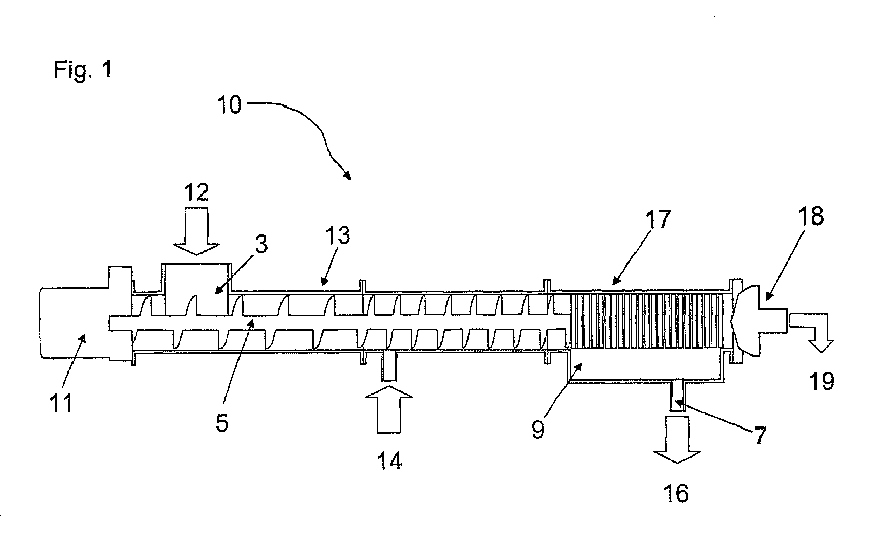

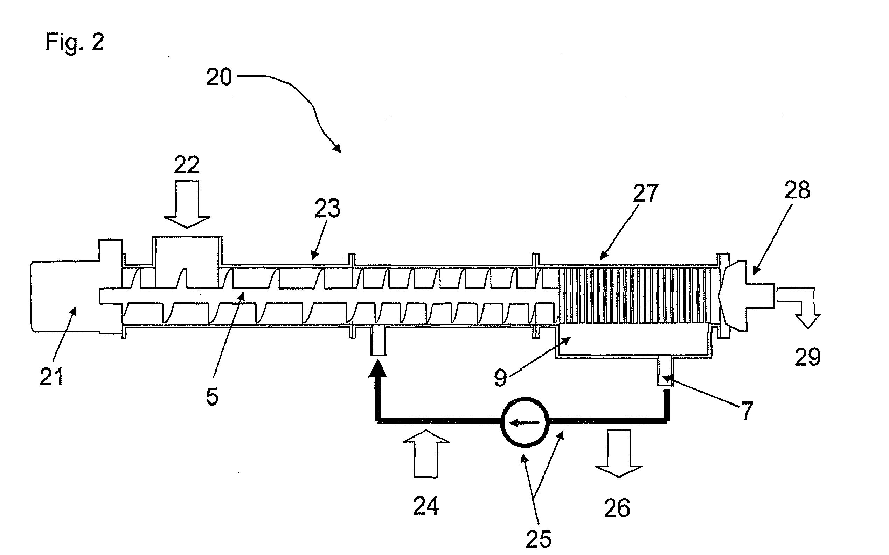

Die Figuren 1 und 2 zeigen jeweils einen Tabakmaterialextruder mit Extraktionsausstattung bzw. -fähigkeit. In der Figur 2 zeigen die gleichen Bezugszeichen oder diejenigen, die lediglich um Zehn erhöht sind, auf gleiche bzw. funktionsgleiche Elemente wie in Figur 1, und diese Bezugszeichen werden nicht separat genannt. Die Extrusionsvorrichtung 10 hat ein Extrudergehäuse 13, darin eine Schnecke 5 und einen Antrieb bzw. ein Getriebe 11 zu deren Drehung. Als Tabakmaterial 12 wird beispielsweise ein Rippenmaterial verwendet, und es wird durch den Einlass 3 dem Extruder 10 zugeführt, in dem es durch die Schnecke 5 nach rechts transportiert und dabei mechanisch unter hohen Druck gesetzt wird. Der Extruder besteht aus einzelnen Abschnitten, die miteinander verflanscht sind (sog. "Schüssen"), und im Schuss hinter dem Einlass 3 erfolgt die Zuführung des Extraktionsmittels 14. Der wiederum auf diesen Schuss folgende Gehäuseabschnitt ist ein austauschbar integrierter Schuss, der die Seihervorrichtung 17 umfasst, wobei hier ein Scheibenseiher dargestellt ist. Unter dem Scheibenseiher, durch den das Extrakt über den Druckabfall zur Umgebung hin ausgebracht wird, befindet sich die Auffangwanne 9 mit dem Extraktauslass 7. An seinem rechten Ende befindet sich der Extruderauslass mit dem Werkzeug 18, aus dem das Extrudat mit Flashverdampfung austritt, so dass sich beispielsweise ein fasriges Tabakmaterial ergibt, das unmittelbar der Rauchproduktherstellung zugeführt werden kann.

Bei der Ausführungsform nach Figur 1 wird die Aufnahmebereitschaft des Extraktionsmittels (Wassers) 14 über die Inhaltsstoffe dadurch erreicht, dass immer frisches Extraktionsmittel bzw. frisches Wasser 14 zugegeben, während das Extrakt 16 abgeführt wird. Die Ausführungsform nach Figur 2 unterscheidet sich hiervon dadurch, dass ein Kreislaufbetrieb erfolgt, also zumindest ein Teil des beladenen Extraktionsmittels, dass aus dem Auslass 7 heraus kommt, wieder zurückgeführt wird. Dabei wird auch etwas Extrakt abgeführt, wie mit dem Pfeil 26 dargestellt ist, während die Leitungen und Förder- bzw. Arbeitseinrichtungen 25 für den Rücktransport sorgen. Bei 24 wird auch diesem Kreislauf noch frisches Extraktionsmittel bzw. Frischwasser zugeführt. Es ist durchaus möglich, die Frischwasserzugabe 24 auf ein Minimum zu beschränken, wenn geeignete Abreicherungsverfahren in den Kreislauf integriert werden. Potenziell nutzbar sind Prozessschritte wie Temperaturänderungen (Beeinflussung des Lösungsvermögens), Einsatz von Ionentauschern, Umkehrosmose, etc. Auch die Selektivitäten des Extraktionsmediums können beeinflusst werden, wie dies gemäß dem Stand der Technik bekannt ist. Ein Beispiel hierfür ist die Einstellung des pH-Wertes, die selektiv gegenüber der Abreicherung von nativen basischen Inhaltsstoffen wirkt.

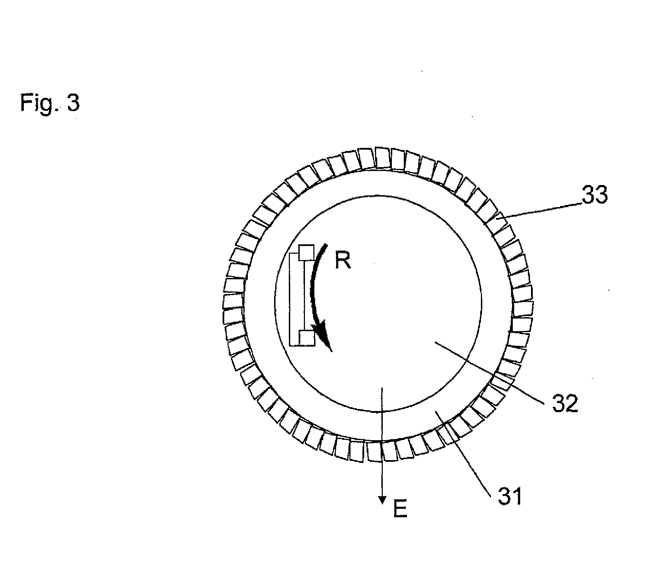

Die Figur 3 zeigt einen Querschnitt durch den Gehäuseabschnitt 31, der mit einem Stabseiher 33 versehen ist. Im Inneren des Gehäuseabschnittes bzw. des Seihers, d.h. im Durchgang 32 dreht sich in Richtung R die Schnecke, und der durch sie erzeugte Druckunterschied gestattet es, das Extrakt E durch die Zwischenräume zwischen den Stäben auszubringen.

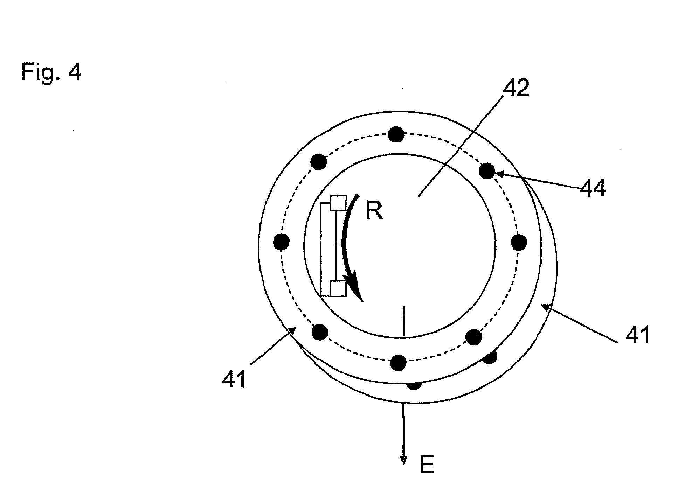

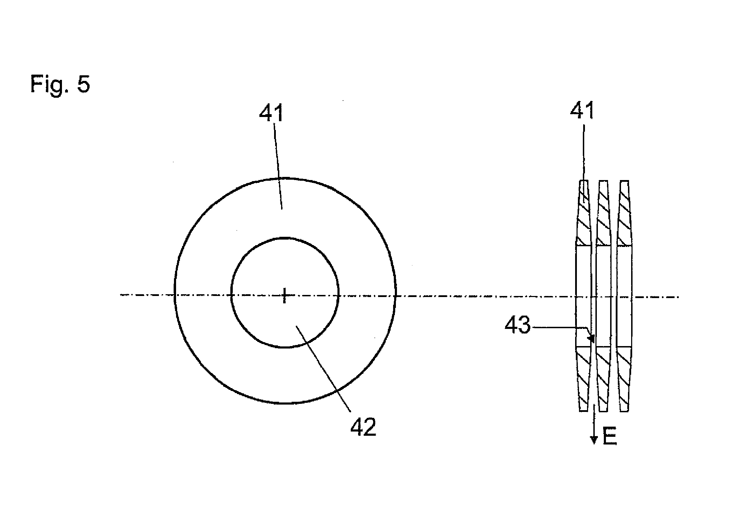

Die Figuren 4 und 5 zeigen schematische Darstellungen für die Ausführungsform mit einem Scheibenseiher, wobei für den Seiher hintereinander angeordnete Kreisringe 41 verwendet werden, die durch Abstandshalter 44 in einem geringen Abstand voneinander gehalten werden. Das beladene Extraktionsmittel 43 im inneren Durchgang 42 wird durch den herrschenden hohen Druck über den kleinen Spalt zwischen den Innenrändern der Scheiben 41 gedrückt und als Extrakt E abgeschieden. Die Scheiben sind so konstruiert, dass sie sich nach Außen leicht verjüngen, so dass der Extraktionsspalt sich nach außen hin erweitert. Derselbe Effekt wird bei den Seiherstäben erreicht, und dieses Öffnungsprofil der sich erweiternden Seiherspalte erzeugt eine optimale Umgebung für den Extraktaustritt durch Druckförderung.

Im Weiteren wird die vorliegende Erfindung nochmals etwas detaillierter mit Hilfe eines Beispiels erörtert. Bei der Beispielsausführung wurde ein Burley-Rippengrade mit ca. 6% Nitratgehalt einer erfindungsgemäßen extraktiven Extrusion mit Hilfe eines Seiherkorbes, bestehend aus Seiherscheiben mit einem freien Spaltmaß von 0,2 mm am Innendurchmesser, unterzogen. Dazu wurde ein dreischüssiger Einwellenextruder im Frischwasserbetrieb mit einem Wasserstromverhältnis von 2 kg Wasser/1 kg Rippen gemäß Figur 1 verwendet.

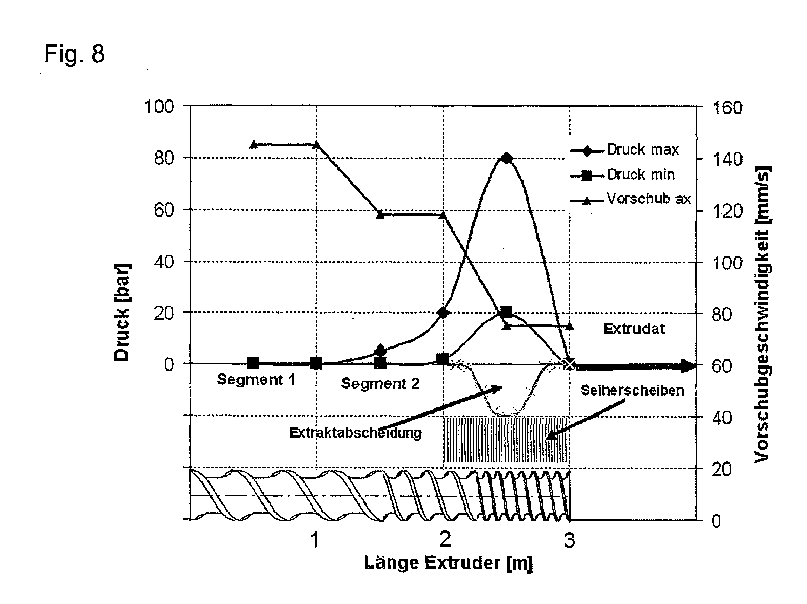

Die erreichte Endfeuchte variierte je nach Prozessbedingungen zwischen 20 und 45%. Das Endergebnis wird durch den Pressdruck, die Seiherlänge, Betriebstemperatur und Wasserzugabe beeinflusst. Unterhalb des Prozessdiagramms in Figur 8 ist die Schneckenkonfiguration bestehend aus drei Elementen mit abnehmender Steigung, die die Verdichtung längst des Weges gewährleistet, dargestellt. Die erreichte Kompression steht im Gleichgewicht mit dem notwendigen Druck zur Durchströmung des Werkzeuges. Abnehmender axialer Vorschub ist die Folge der Kammervolumenreduzierung und der Verdichtung.

Der Extrakt wird über den Seiher ausgetragen und aufgefangen. Je nach Werkzeug konnte eine zerfaserte Rippe, die ohne Nachbehandlung direkt nutzbar ist, erzielt werden.

Alternativ ist ein Austrag mit höherer Feuchtigkeit, geeignet zum direkten Schneiden, möglich. Allerdings ist der erreichbare Nitrat-Abscheidegrad, verursacht durch die höhere notwendige Austrittsfeuchte bei gleichem Extraktionsverhältnis, geringer. Der Extrakt kann je nach den örtlichen Einleitbedingungen dem Kanalsystem/Klärwerk zugeführt werden. Eine Aufbereitung ist grundsätzlich auch möglich und wird durch Wirtschaftlichkeitsbetrachtungen entschieden.

Das Extrudat wurde einer Standardanalytik mit dem folgenden Ergebnis unterzogen:

| | Ausgangsmaterial | Endprodukt | Bemerkung |
|---|---|---|---|
| Nitratgehalt | 6,0 % | 1,2% | entspricht in etwa dem Verdünnungsmodell Abb. 1 |
| Chloridgehalt | 2,8% | 0,56% | entspricht in etwa dem Verdünnungsmodell Abb. 1 |
| Füllfähigkeit | 3,1 ml/g | 7,0 ml/g | deutlicher Füllfähigkeitszuwachs verglichen mit Standard-Rippenverfahren* |

| | | | |
|---|---|---|---|
| * gegenüber einer Füllfähigkeit einer "Standard-Faser-Extrusion" gemäß DE 10 2004 059 388 A1 von ca. bis 4-5ml/g oder einer Rippenbehandlung mit Schneider mit einer Füllfähigkeit von 5- 6ml/g | | | |

Aus dem Produkt wurden Zigaretten gefertigt und zu diesem Zweck wurden Schnitttabakmischungen mit 20% Rippen-Anteil ausgestattet. Die Probe enthielt Rippen, die mit dem erfindungsgemäßen Verfahren hergestellt worden sind. Der Vergleich wurde mit Rippen ausgestattet, die nur einer Extrusion unter Ausschluss einer Extraktion unterworfen worden sind.

Die Auswirkungen der Rippenextraktion auf physikalische Daten und Rauchwerte können wie folgt zusammengefasst und beschrieben werden.
→ ca. 20% erhöhter Zugwiderstand;
→ ca. 25% weniger Durchmesserdeformation (bessere Härte bei gleicher Stopfdichte);
→ ca. 66% verringerter Endenausfall.

Eine etwas abgewandelte Ausführungsform einer Vorrichtung ist in der Figur 8 zu sehen. Der Materialfluss findet hier von rechts nach links statt, d.h. das Tabakmaterial kommt aus der Extrudereinheit 53 der Vorrichtung 50, wobei am Ende der Extrudereinheit (Schneckenextruder 53) die Zuführung des Extraktionsmittels mit dem Pfeil 54 angedeutet ist.

Das mit dem Extraktionsmittel versehene Tabakmaterial tritt dann in eine Hochdruck-Zahnpumpe ein, die in Figur 8 das Bezugszeichen 51 erhalten hat und deren Einund Auslassdruck durch zwei Drucksensoren 55 überwacht wird.

Beim Durchgang durch die Hochdruckpumpe 51 wird der Druck im Tabakmaterial mechanisch stark erhöht. Mit diesem hohen Druck tritt das Tabakmaterial in die Extraktionseinheit, also hier in die Seihervorrichtung 57 ein, wo das beladene Extraktionsmittel abgegeben wird (Pfeil 56). Danach kann das Tabakmaterial mittels des Werkzeuges 58 geformt werden.

Zwischen dem Seiherkorb 57 und dem Extruder 53 wird also die Hochdruckpumpe 51 eingesetzt, die Druckerhöhungsaufgaben für das zu transportierende und zu verarbeitende Tabakmaterial füllt. Hier ist festzuhalten, dass die Hochdruckpumpe grundsätzlich vollständig die Aufgabe des Erhöhens des Druckes übernehmen, aber auch eine zusätzliche Druckerhöhung zu einer Druckerhöhung im Extruder bereitstellen kann. In jedem Fall wird, wenn der höchste Druck erst nach der Pumpe 51 auftritt, der Extraktionsmitteleintrag am Ende des Extruders beim Pfeil 54 einfacher werden, da nicht gegen den höchsten Druck im System eingebracht werden muss. Es findet also bei dieser Ausführungsform eine Entkopplung der Druckbereiche zwischen Extraktionsmitteleintrag und Extraktionsmittelaustrag statt. Ferner kann ein höherer Druck im Seiherkorbbereich 57 erzeugt werden, was für eine bessere Trennung der festen Bestandteile von den flüssigen Bestandteilen sorgt. Eine weitere vorteilhafte Auswirkung der Druckentkopplung, also des höchsten Druckes erst am Ende der Pumpe 51, ist ein besseres Förderverhalten im Extruder.

## Patentansprüche

1. Tabakmaterial, erhalten durch ein Verfahren zum Extrahieren von Stoffen aus dem Tabakmaterial, bei dem das Tabakmaterial durch ein Gehäuse gefördert wird, dem ein Extraktionsmittel (14, 24) zugeführt und aus dem das Extraktionsmittel wieder abgeführt wird, **dadurch gekennzeichnet, dass** die Extraktion durch ein Kontaktieren des Tabakmaterials mit dem Extraktionsmittel während eines Tabakmaterial-Extrusionsprozesses in einem Extruder (10, 20) unter erhöhtem Extrusionsdruck stattfindet.

2. Tabakmaterial nach Anspruch 1, wobei der erhöhte Extrusionsdruck und eine erhöhte Extrusionstemperatur durch mechanische Verdichtung des Tabakmaterials im Extruder (10, 20) erzeugt werden, insbesondere durch eine Förderschnecke eines Schneckenextruders (10, 20).

3. Tabakmaterial nach Anspruch 1 oder 2, wobei als Extraktionsmittel eine Flüssigkeit, insbesondere Wasser, oder ein Gas zugeführt wird, das durch Druck und/oder Temperatur in einen extraktionsfähigen Zustand gebracht wird, insbesondere in einen flüssigen und/oder überkritischen Zustand.

4. Tabakmaterial nach einem der Ansprüche 1 bis 3, wobei das mit dem Extraktionsmittel beaufschlagte Tabakmaterial durch einen Seiher (17, 27), insbesondere einen Scheibenseiher, einen Korbseiher oder einen Stabseiher, geführt wird, durch den das Extrakt aus dem Extruder (10) abgeschieden wird.

5. Tabakmaterial nach Anspruch 4, wobei das Extrakt ganz oder teilweise als Extraktionsmittel wieder dem Extruder zugeführt wird, wobei insbesondere dem Extrakt frisches Extraktionsmittel zugesetzt und/oder der Extrakt an den zu extrahierenden Stoffen durch eine oder mehrere der folgenden Maßnahmen abgereichert wird:
- Ionentausch,
- Umkehrosmose,
- pH-Wert-Einstellung.

6. Tabakmaterial nach einem der Ansprüche 1 bis 5, wobei das Tabakmaterial vor der Extraktion einer mechanischen Druckerhöhung außerhalb der Extrusion oder zusätzlich zur Extrusion unterzogen wird, insbesondere mittels einer Hochdruck-Zahnradpumpe.

7. Tabakmaterial nach Anspruch 6, wobei die mechanische Druckerhöhung nach der Extrusion und vor der Extraktion stattfindet.

8. Tabakmaterial nach Anspruch 6 oder 7, wobei das Extraktionsmittel dem Tabakmaterial vor der mechanischen Druckerhöhung, insbesondere am Ende des Extrusionsprozesses bzw. Schneckenextruders oder nach dem Extrusionsprozess bzw. Schneckenextruder, zugeführt wird.

9. Tabakmaterial nach einem der vorhergehenden Ansprüche, wobei das erhaltene Tabakmaterial eine um 50% erhöhte Füllfähigkeit aufweist.

10. Rauchprodukt, insbesondere Zigarette, umfassend ein Tabakmaterial nach einem der vorhergehenden Ansprüche.
